# EUROPEAN PATENT APPLICATION

(11) **EP 4 668 041 A1**
(43) Date of publication of application: **24.12.2025**
(21) Application number: 25183930.4
(22) Date of filing: 19.06.2025
(51) Int. Cl.: G05B 19/409

(54) **CONTROL DEVICE**

(30) Priority: 21.06.2024 JP 2024100207
(71) Applicant: Brother Kogyo Kabushiki Kaisha, Nagoya, Aichi 467-8561 (JP)
(72) Inventor: KURUMI, Kensuke, Nagoya, 467-8562 (JP)
(74) Representative: J A Kemp LLP

(57) **Abstract**

The control device receives a first instruction for driving the machine tool in the power saving mode (yes at S11). The control device drives the machine tool in the power saving mode when the first instruction is received, by turning OFF, based on first setting information stored in a storage portion, a first target device among devices that the machine tool has(S27). The control device receives a second instruction, in a state in which the machine tool is being driven in the power saving mode by the drive processing. The control device changes the device to be turned OFF by the drive processing from the first target device to a second target device, based on the second instruction received by the second reception processing.

## Description

### BACKGROUND ART

JP 5997220 B discloses a control device capable of setting a power saving priority mode. The power saving priority mode is an operating mode controlling a machine tool such that power consumption is reduced to a maximum extent. The control device is set to the power saving priority mode by a switch operation by an operator. In the state in which the power saving priority mode is set, among a plurality of devices, the control device turns OFF devices determined in accordance with an operation state of the machine tool. Note that, which device is to be turned OFF is defined in advance for each of the operation states of the machine tool, using parameter sets stored in a ROM.

### SUMMARY

In the power saving priority mode, the operator wishes to switch a desired device ON among the plurality of devices. However, in the above-described control device, the device determined based on the parameter set is constantly OFF. Thus, in the power saving priority mode, the operator is unable to turn ON the desired device.

An object of the present disclosure is to provide a control device that contributes to reducing the power consumption of a machine tool by allowing an operator to turn off a plurality of devices with a single operation, and enabling the operator to easily change the settings for specifying which devices, among a plurality of devices, are to be turned off.

A control device according to an aspect of the present disclosure that drives a machine tool in a power saving mode that is an operating mode saving power consumption of the machine tool. The control device executes processes include drive processing, second reception processing, and change processing. The first reception processing receives a first instruction for driving the machine tool in the power saving mode. The drive processing drives the machine tool in the power saving mode when the first instruction is received by the first reception processing, by turning OFF, based on first setting information stored in a storage portion, a first target device among devices that the machine tool has. The second reception processing receives a second instruction, in a state in which the machine tool is being driven in the power saving mode by the drive processing. The change processing changes the device to be turned OFF by the drive processing from the first target device to a second target device, based on the second instruction received by the second reception processing.

The control device contributes to performing an all-in-one operation to turn OFF the first target devices in the power saving mode, based on the first instruction received from an operator. Further, the control device contributes to a setting to change the device to be turned OFF in the power saving mode, by the operator inputting the second instruction. Thus, the control device contributes to easily changing the device to be turned OFF by the operator when driving the machine tool in the power saving mode.

In the control device according to the aspects, the storage portion may further store second setting information specifying a condition when changing the first target device to the second target device by the change processing. The change processing may include changing the device to be turned OFF by the drive processing from the first target device to the second target device by switching an ON/OFF state of the device within a range of the condition specified by the second setting information. The control device contributes to limiting the device for which the ON/OFF state can be switched in the power saving mode to be within the range of the condition specified by the second setting information.

In the control device according to the aspects, in the first setting information, the first target device may be specified for each of operating states of the machine tool. The control device may further execute acquisition processing. The acquisition processing may acquire the operating state. The drive processing may determine, based on the first setting information, the first target device to be turned OFF in the operating state acquired by the acquisition processing. The drive processing may drive the machine tool in the power saving mode by turning OFF the determined first target device. The control device contributes to specifying the device to be turned OFF in the power saving mode for each of the operating states of the machine tool.

In the control device according to the aspects, the storage portion may further store second setting information specifying, for each of the operating states of the machine tool, a condition when changing the first target device to the second target device by the change processing. The change processing may change the device to be turned OFF by the drive processing from the first target device to the second target device by switching an ON/OFF state of the device within a range of the condition specified by the second setting information in the operating state acquired by the acquisition processing. Among the devices to be turned OFF, the control device contributes to specifying the device that can be changed by the operator for each of the operating states of the machine tool.

The control device according to the aspect may further execute a process including end processing. The end processing may end the driving in the power saving mode by the drive processing, when the second instruction is received, by the second reception processing, in which none of the devices are specified as the second target device. The control device contributes to ending the power saving mode when the instruction is received in which none of the devices are to be turned OFF during the operation of the power saving mode.

The control device according to the aspects may further execute display processing. The display processing may display, on a display portion, a notification image notifying that the machine tool is being driven in the power saving mode by the drive processing. The control device contributes to the operator recognizing that the machine tool is being driven in the power saving mode, by visually checking the display portion.

The control device according to the aspects may further executing setting processing. The setting processing may set the first target device in the first setting information. The control device contributes to having the operator set which the devices are to be turned OFF at the start of the operation of the power saving mode.

In the control device according to the aspects, the first reception processing may receive the first instruction in accordance with selection of a first switch for driving the machine tool in the power saving mode. The control device contributes to driving the machine tool in the power saving mode that collectively turns the first target devices OFF, by the operator selecting the first switch.

In the control device according to the aspects, the second reception processing may receive the second instruction in accordance with selection of a second switch corresponding to the second target device. The control device contributes to changing the device to be turned OFF in the power saving mode from the first target device to the second target device, by the operator selecting the second switch.

### BRIEF DESCRIPTION OF DRAWINGS

FIG. 1 is a perspective view of a machine tool 1 as viewed from the rear.
FIG. 2 is a front view of the machine tool 1.
FIG. 3 is a block diagram showing an electrical configuration of the machine tool 1 and a numerical control device 30.
FIG. 4 is a diagram showing an example of an operation screen 120A.
FIG. 5 is a diagram showing first setting information.
FIG. 6 is a diagram showing an example of an operation screen 120B.
FIG. 7 is a diagram showing second setting information.
FIG. 8 is a diagram showing an example of an operation screen 120C.
FIG. 9 is a flowchart of switching processing.
FIG. 10 is a flowchart of state acquisition processing.
FIG. 11 is a flowchart of change processing.
FIG. 12 is a flowchart of setting processing.

### DESCRIPTION

Overview of machine tool 1

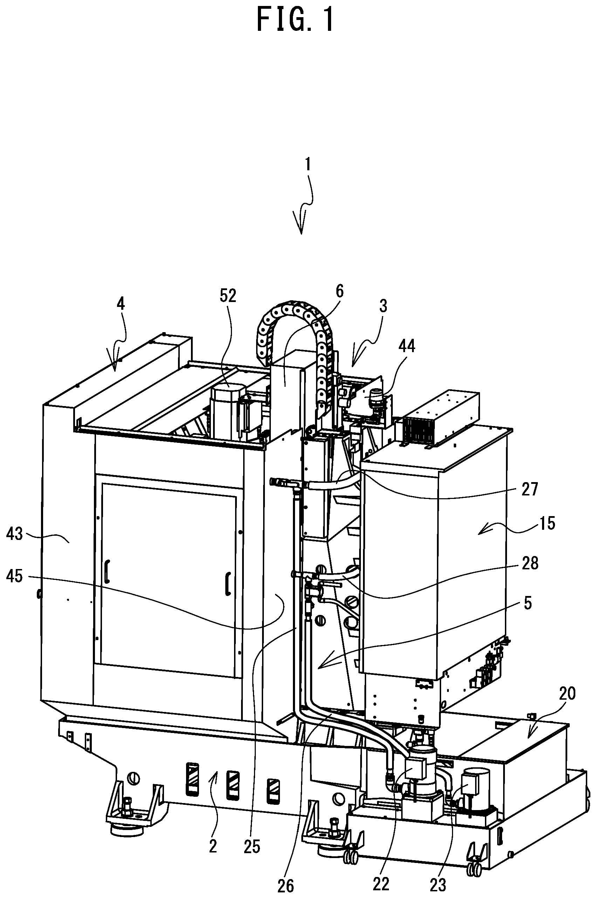

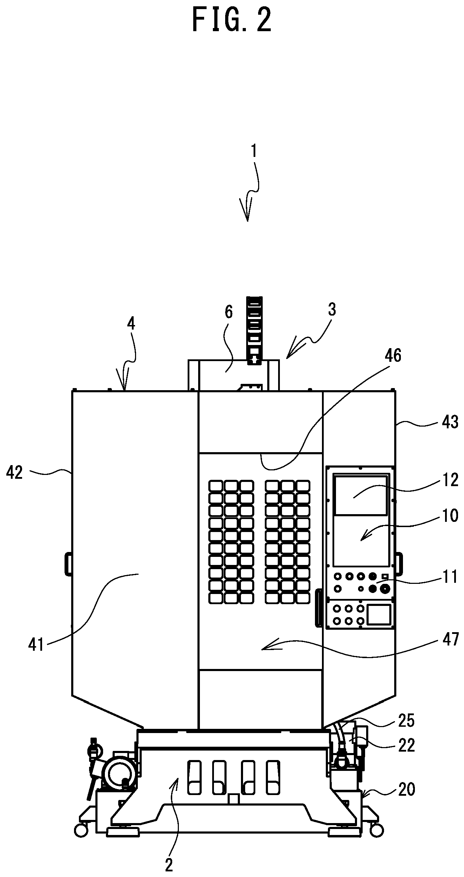

An overview of a machine tool 1 and a numerical control device 30 will be described with reference to FIG. 1 and FIG. 2. The machine tool 1 includes a base 2, a machine main body 3, a cover 4, a control box 15.

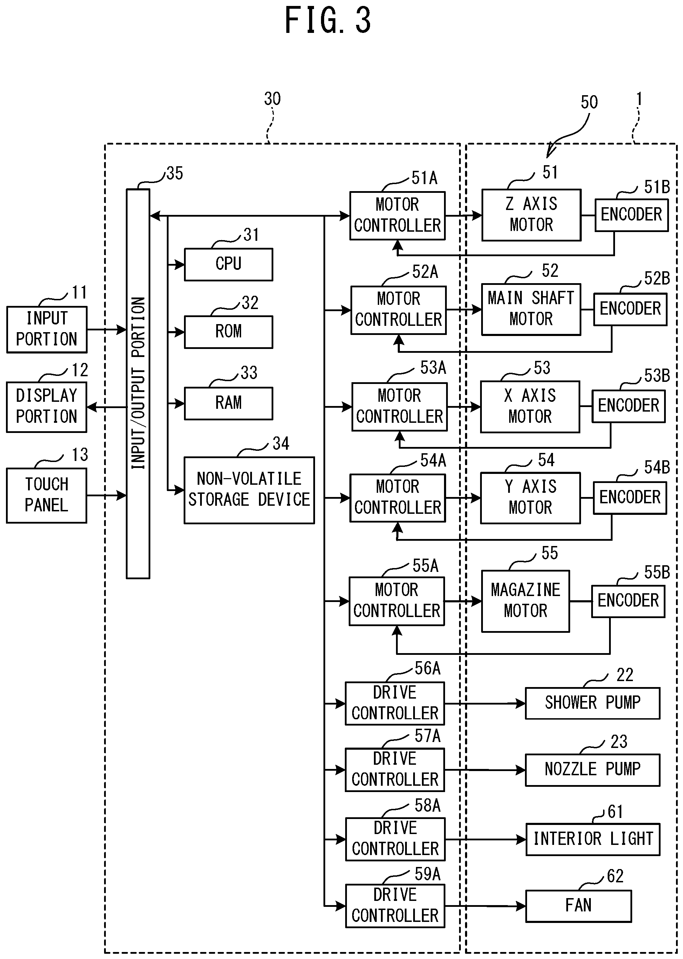

The base 2 has a substantially cuboid shape. The base 2 is a metal foundation. The machine main body 3 is located at an upper rear portion of the base 2. The machine main body 3 includes a column 5, a main shaft head 6, a main shaft. The column 5 is located standing at an upper rear portion of the base 2. The main shaft head 6 can be raised and lowered in a Z axis direction along the front surface of the column 5, by a Z axis motor 51 (refer to FIG. 3) and a Z axis movement mechanism. The main shaft head 6 rotatably supports the main shaft inside the main shaft head 6. A tool is mounted to a lower end portion of the main shaft. The tool is rotated by a driving power of a main shaft motor 52 (refer to FIG. 3).

A table is located at the upper portion of the base 2. The table is moved in an X axis direction and a Y axis direction by an X axis motor 53 (refer to FIG. 3), a Y axis motor 54 (refer to FIG. 3), an X axis guide mechanism and a Y axis guide mechanism. A workpiece is held on an upper surface of the table. The machine tool 1 executes cutting processing on the workpiece by moving the workpiece held on the table relative to the tool mounted to the main shaft.

The cover 4 is located at the upper portion of the base 2. The cover 4 covers a periphery of the machine main body 3 and the upper portion of the base 2. The cover 4 includes a front wall 41, a left wall 42, a right wall 43, a left rear wall 44, and a right rear wall 45. The left rear wall 44 and the right rear wall 45 configure a rear wall of the cover 4. The left rear wall 44 is fixed to a front end portion on the left surface of the column 5, and extends to the left. The right rear wall 45 is fixed to a front end portion on the right surface of the column 5, and extends to the right. The cover 4 covers a machining region of the machine tool 1. The machining region is a region for the machine tool 1 to machine the workpiece. The machining region contains a movable range in the Z axis direction of the main shaft and the main shaft head 6, and a movable range in X and Y directions of the table. The cover 4 prevents chips that are generated in the course of the cutting machining of the workpiece from being dispersed to the outside.

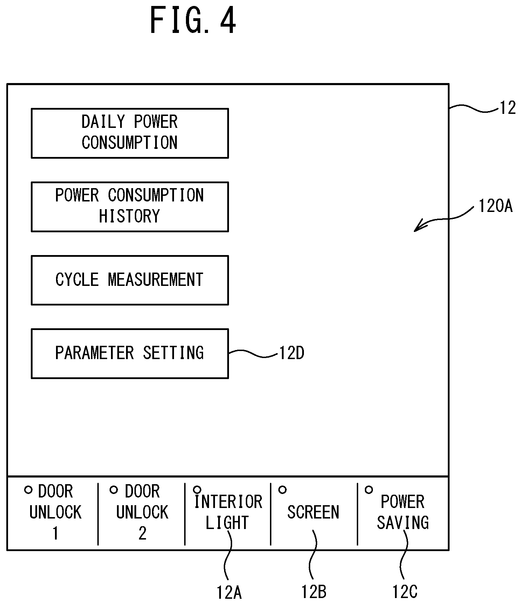

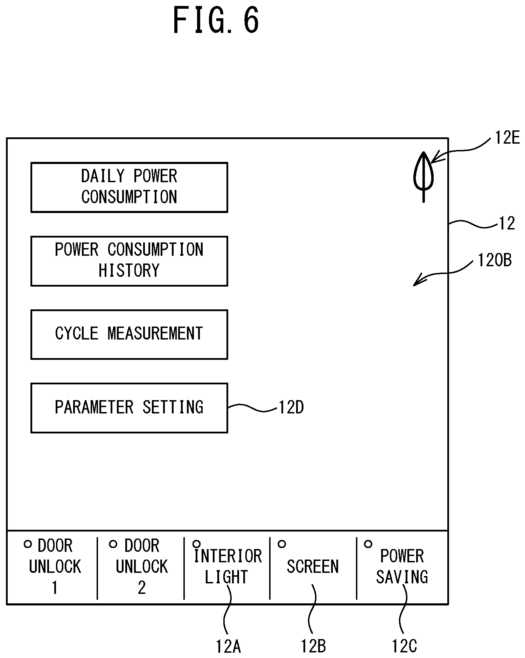

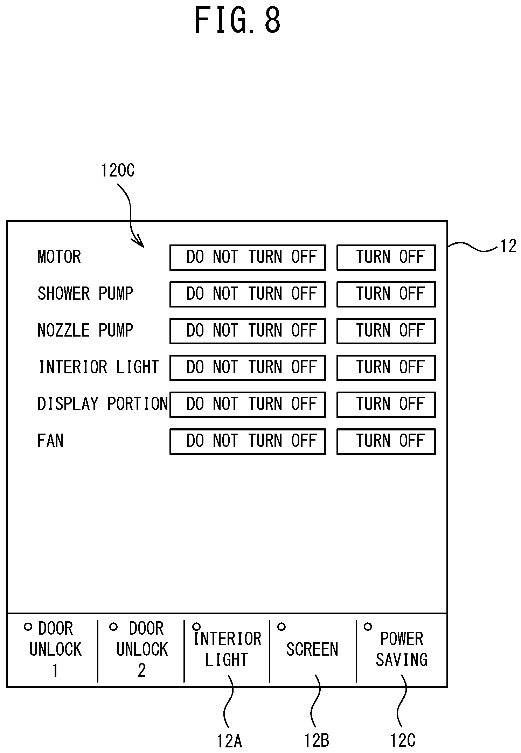

The front wall 41 includes an opening 46, an opening/closing door 47, and an operation panel 10. The opening 46 is located substantially at the center of the front wall 41. The opening 46 has a substantially square shape. The opening/closing door 47 is located to move in the left-right direction in the opening 46. The operation panel 10 is located to the right of the opening 46. The operation panel 10 is connected to the numerical control device 30 (refer to FIG. 3) by a harness. The operation panel 10 includes an input portion 11, a display portion 12, and a touch panel 13 (refer to FIG. 3). The input portion 11 includes various switches for performing various settings of the machine tool 1. The input portion 11 includes a motor switch, a shower switch, a coolant switch, a fan switch, and key switches to be described later. The display portion 12 is a liquid crystal display that displays operation screens 120A (refer to FIG. 4), 120B (refer to FIG. 6), 120C (refer to FIG. 8). The touch panel 13 is located on the front surface of the display portion 12. The touch panel 13 detects a position touched by an operator.

Nozzles and tip showers are located inside the cover 4. The nozzles spray a cutting fluid toward the upper surface of the table. The tip showers are located on an inner surface of the cover 4. The tip shower includes a plurality of spray opening for spraying the cutting fluid downward.

The cutting fluid stored in a tank 20 is drawn up by a shower pump 22 and a nozzle pump 23. The cutting fluid drawn up by the shower pump 22 is supplied to the tip showers via hoses 25 and 27. The cutting fluid supplied to the tip showers is sprayed downward from the spray openings. The sprayed cutting fluid washes away chips that have become attached to and accumulated inside the cover 4. The cutting fluid drawn up by the nozzle pump 23 is supplied to the nozzles via hoses 26 and 28. The cutting fluid supplied to the nozzles is sprayed toward the upper surface of the table. The sprayed cutting fluid washes away the chips that have become attached to a machined portion of the workpiece, and also improves lubricity between the workpiece and the tool.

An interior light 61 (refer to FIG. 3) is located inside cover 4. The interior light 61 functions as lighting illuminating the interior of the cover 4.

The control box 15 is located at a rear surface of the cover 4. The numerical control device 30 (refer to FIG. 3) is housed inside the control box 15. The numerical control device 30 controls operations of the machine tool 1. A fan 62 (refer to FIG. 3) is located inside the control box 15. The fan 62 cools the numerical control device 30 by blowing air into the cover 4.

### Electrical configuration

An electrical configuration of the numerical control device 30 and the machine tool 1 will be described with reference to FIG. 3. The numerical control device 30 includes a CPU 31, a ROM 32, a RAM 33, a non-volatile storage device 34, an input/output portion 35, motor controllers 51A to 55A, drive controllers 56A to 59A.

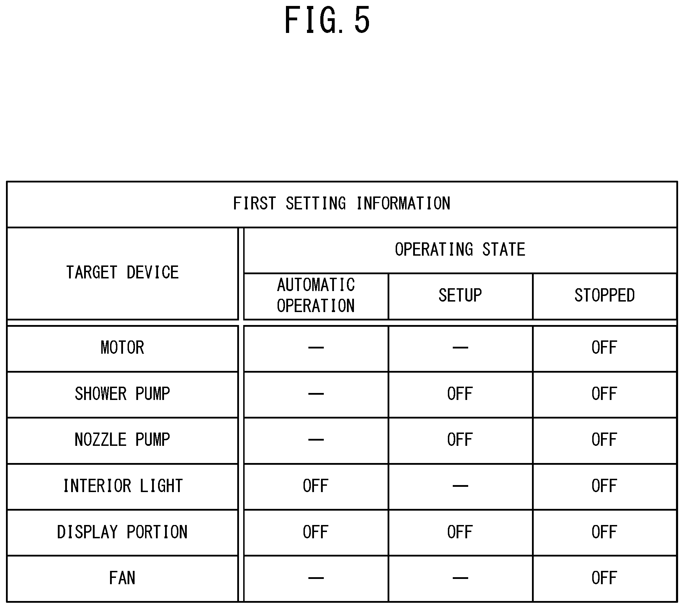

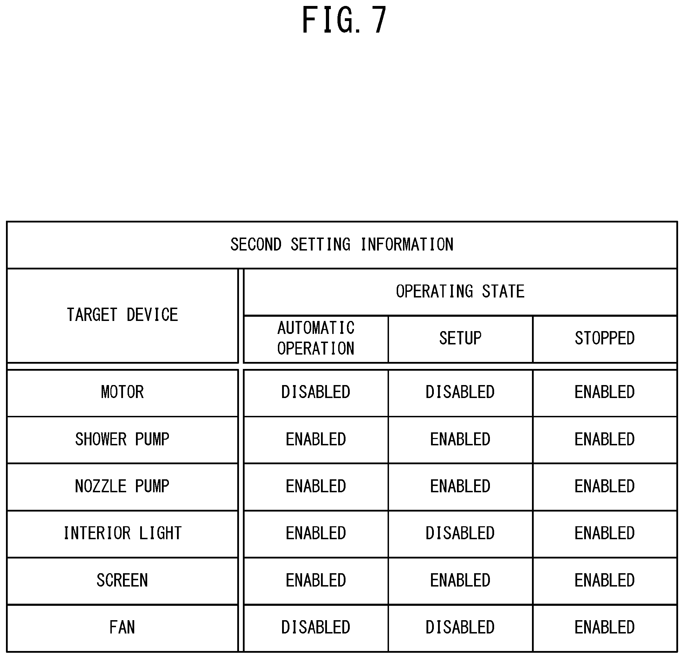

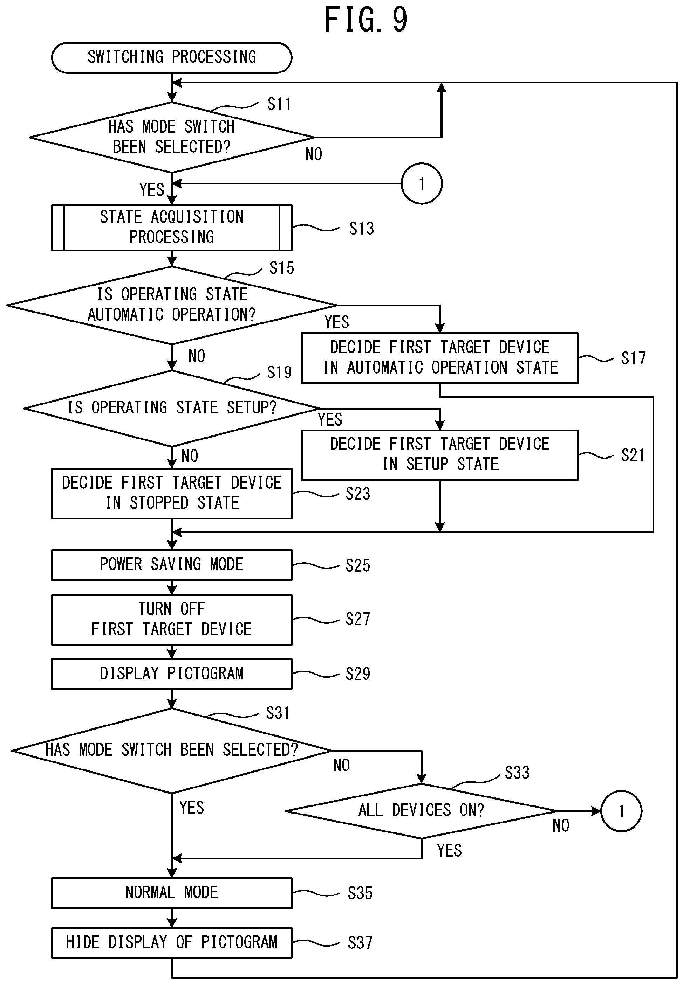

The CPU 31 performs overall control of the numerical control device 30. The ROM 32 stores a control program. The CPU 31 executes various processing (refer to FIG. 9 to FIG. 12) to be described later, by executing driving based on the control program. The RAM 33 temporarily stores various data. The non-volatile storage device 34 stores a machining program, first setting information (refer to FIG. 5), second setting information (refer to FIG. 7). The machining program is configured by a plurality of blocks including various instructions. The CPU 31 causes the machine tool 1 to execute a machining operation that machines the workpiece using the tool, by controlling the machine tool 1 based on the machining program.

Note that the control program stored in the ROM 32 may also be stored in a readable external storage medium (for example a USB memory or a CD-ROM). The CPU 31 may read out the program from the storage medium and store the program in the non-volatile storage device 34, and may execute the control program stored in the non-volatile storage device 34. Alternatively, the machine tool 1 may be configured to be able to communicate with another apparatus (for example a server) via a communication line. The control program may be stored in a storage device of the other apparatus. The CPU 31 may store, in the non-volatile storage device 34, the control program that is acquired by performing communication with the other apparatus.

The motor controllers 51A to 55A are connected to the CPU 31 via the input/output portion 35. The motor controller 51A is connected to the Z axis motor 51 and an encoder 51B. The motor controller 52A is connected to the main shaft motor 52 and an encoder 52B. The motor controller 53A is connected to the X axis motor 53 and an encoder 53B. The motor controller 54A is connected to the Y axis motor 54 and an encoder 54B. The motor controller 55A is connected to a magazine motor 55 and an encoder 55B. The magazine motor 55 drives a tool magazine used to replace the tool mounted to the main shaft. When the Z axis motor 51, the main shaft motor 52, the X axis motor 53, the Y axis motor 54, and the magazine motor 55 are collectively referred to, they are referred to as a motor 50 or motors 50. The motors 50 are servo motors.

The motor controllers 51A to 55A receive commands from the CPU 31, and output a drive current to the corresponding motor 50. The motor controllers 51A to 55A receive feedback signals from the encoders 51B to 55B, and perform feedback control of a position and speed.

The drive controllers 56A to 59A are connected to the CPU 31 via the input/output portion 35. The drive controller 56A is connected to the shower pump 22. The drive controller 57A is connected to the nozzle pump 23. The drive controllers 56A and 57A receive commands from the CPU 31 and output a drive current to the corresponding shower pump 22 and nozzle pump 23. The shower pump 22 and the nozzle pump 23 are driven by the drive currents. By driving the shower pump 22, the cutting fluid is sprayed from the tip showers. By driving the nozzle pump 23, the cutting fluid is sprayed from the nozzles. The drive controller 58A is connected to the interior light 61. The drive controller 58A receives commands from the CPU 31 and outputs a drive current to the interior light 61. The interior light 61 is illuminated by receiving the drive current. The drive controller 59A is connected to the fan 62. The drive controller 59A receives commands from the CPU 31 and outputs a drive current to the fan 62. The fan 62 is rotated by receiving the drive current, and blows air into the control box 15.

The input portion 11, the display portion 12, and the touch panel 13 are connected to the CPU 31 via the input/output portion 35. The input portion 11 outputs a signal, to the CPU 31, indicating that an input operation has been performed. The display portion 12 receives commands from the CPU 31 and displays screens. The touch panel 13 outputs a signal, to the CPU 31, indicating that a touch operation has been performed.

The input portion 11 includes, as physical switches, the motor switch, the shower switch, the coolant switch, and the fan switch. The motor switch is depressed when switching between a state in which the motor 50 is driven and a state in which the motor 50 is not driven. The shower switch is depressed when switching between a state in which the shower pump 22 is driven in order to spray the cutting fluid from the tip showers, and a state in which the shower pump 22 is not driven. The coolant switch is depressed when switching between a state in which the nozzle pump 23 is driven in order to spray the cutting fluid from the nozzles, and a state in which the nozzle pump 23 is not driven. The fan switch is depressed when switching between a state in which the fan 62 is driven and a state in which the fan 62 is not driven.

### Operation screens

FIG. 4 shows an example of the operation screen 120A displayed on the display portion 12. The operation screen 120A includes an interior light switch 12A, a screen switch 12B, a mode switching switch 12C, and a parameter setting switch 12D.

The interior light switch 12A is selected when switching between a state in which the interior light 61 is illuminated, and a state in which the interior light 61 is not illuminated. The screen switch 12B is selected when switching between a state in which the screen is displayed on the display portion 12, and a state in which the screen is not displayed on the display portion 12. The mode switching switch 12C is selected when switching the machine tool 1 to a normal mode and to a power saving mode. The normal mode and the power saving mode will be described in detail later. The parameter setting switch 12D is selected when setting drive conditions in the power saving mode.

Hereinafter, when the motor switch, the shower switch, the coolant switch, and the fan switch of the input portion 11, and the interior light switch 12A and the screen switch 12B of the operation screen 120A are collectively referred to, they will be referred to as "ON/OFF switches". The motor 50, the shower pump 22, the nozzle pump 23, the interior light 61, the display portion 12, and the fan 62 whose drive states are switched by the ON/OFF switches will be referred to as a "target device" or "target devices". Switching to the state in which the target device is driven will be referred to as "turning the target device ON", and switching to the state in which the target device is not driven will be referred to as "turning the target device OFF".

For example, when the target device is the shower pump 22, in a state in which power is supplied to the drive controller 56A that drives the shower pump 22, causing communication with the CPU 31 to be possible and causing the power to not be supplied to the shower pump 22 will be referred to as "turning the shower pump 22 OFF". Alternatively, causing the power to not be supplied to the drive controller 56A will be referred to as "turning the shower pump 22 OFF".

### Power saving mode

Separately to the normal mode, which is a normal operating mode, the machine tool 1 can be driven in the power saving mode. The power saving mode is an operating mode in which, of the target devices, one of the motor 50, the shower pump 22, the nozzle pump 23, the interior light 61, the display portion 12, and the fan 62, or the combination thereof, which are specified by the first setting information (refer to FIG. 5) to be described later, is turned OFF. When the machine tool 1 is driven in the power saving mode, power consumption is saved compared to when the machine tool 1 is driven in the normal mode.

The first setting information shown in FIG. 5 specifies the target device to be turned OFF when the machine tool 1 is driven in the power saving mode (hereinafter referred to as a "first target device" or "first target devices"). In FIG. 5, the target device associated with "OFF" corresponds to the first target device. In FIG. 5, the target device associated with " - " is turned ON, even when the machine tool 1 is driven in the power saving mode.

The first target device is specified for each of operating states of the machine tool 1. The operating state of the machine tool 1 includes an automatic operation state, a setup state, and a stopped state. Details of the operating states are as follows.

In the automatic operation state, the machining program is read out from the non-volatile storage device 34 and is stored in the RAM 33. Subsequently, the machining operation is automatically executed by the machine tool 1, by sequentially reading out and executing the instructions from the machining program stored in the RAM 33. For example, when an operation to select and execute the machining program is performed via the input portion 11, the operating state of the machine tool 1 is the automatic operation state.

In the setup state, adjustment of the machine tool 1 is performed by the operator driving the machine tool 1 using a test program, by the operator driving the machine tool 1 manually. For example, in a state in which the physical key switch included in the input portion 11 is turned ON, the operating state of the machine tool 1 is the setup state.

In the stopped state, the driving of the machine tool 1 is stopped. When the operating state of the machine tool 1 is neither the automatic operation state nor the setup state, the operating state of the machine tool 1 is the stopped state.

According to the first setting information shown in FIG. 5, when the machine tool 1 is in the automatic operation state, the interior light 61 and the display portion 12 associated with "OFF" correspond to the first target devices. When the machine tool 1 is in the setup state, the shower pump 22, the nozzle pump 23, and the display portion 12 associated with "OFF" correspond to the first target devices. When the machine tool 1 is in the stopped state, the motor 50, the shower pump 22, the nozzle pump 23, the interior light 61, the display portion 12, and the fan 62 are all associated with "OFF" and thus all of the target devices correspond to the first target devices.

When, in the state in which the machine tool 1 is being driven in the normal mode, an operation is performed to select the mode switching switch 12C of the operation screen 120A shown in FIG. 4, the numerical control device 30 switches the operating mode of the machine tool 1 to the power saving mode. In the power saving mode, the numerical control device 30 determines the first target devices depending on the operating state, based on the first setting information, and collectively turns OFF the determined first target devices. Further, as shown in FIG. 6, the numerical control device 30 switches to the operation screen 120B in which a pictogram 12E is displayed in an upper right portion. The pictogram 12E indicates that the operating mode of the machine tool 1 is the power saving mode.

On the other hand, when, in the state in which the machine tool 1 is being driven in the power saving mode, an operation is performed to select the mode switching switch 12C of the operation screen 120B shown in FIG. 6, the numerical control device 30 returns the operating mode of the machine tool 1 to the original normal mode. For example, the normal mode is a mode in which all the target devices of the motor 50, the shower pump 22, the nozzle pump 23, the interior light 61, the display portion 12, and the fan 62 are turned ON, regardless of the operating state of the machine tool 1. Further, the numerical control device 30 ends the display of the pictogram 12E, and returns to the operation screen 120A shown in FIG. 4.

### Individual setting changes (during power saving mode)

When the ON/OFF switch is operated in the state in which the machine tool 1 is being driven in the power saving mode, the numerical control device 30 switches the ON/OFF state of the target device. Note that the target device that can be switched the ON/OFF state by the operation of the ON/OFF switch is specified by second setting information shown in FIG. 7, for each of the operating states of the machine tool 1. In FIG. 7, the switching of the ON/OFF state is possible for the target devices associated with "Enabled". On the other hand, in FIG. 7, the switching of the ON/OFF state is not possible for the target devices associated with "Disabled".

For example, when the shower switch is operated to turn OFF the shower pump 22 while the machine tool 1 is in the automatic operation state, since "Enabled" is associated with the shower pump 22 in the automatic operation state in the second setting information, the numerical control device 30 turns the shower pump 22 OFF. For example, when the interior light switch 12A is operated to turn ON the interior light 61 while the machine tool 1 is in the automatic operation state, since "Enabled" is associated with the interior light switch 12A in the automatic operation state in the second setting information, the numerical control device 30 turns the interior light 61 ON. On the other hand, when the motor switch is operated to turn OFF the motor 50 while the machine tool 1 is in the automatic operation state, since "Disabled" is associated with the motor 50 in the automatic operation state in the second setting information, the numerical control device 30 does not turn the motor 50 OFF.

For example, when the nozzle switch is operated to turn ON the nozzle pump 23 while the machine tool 1 is in the setup state, since "Enabled" is associated with the nozzle pump 23 in the setup state in the second setting information, the numerical control device 30 turns the nozzle pump 23 ON. On the other hand, when the interior light switch 12A is operated to turn OFF the interior light 61 while the machine tool 1 is in the setup state, since "Disabled" is associated with the interior light 61 in the setup state in the second setting information, the numerical control device 30 does not turn the interior light 61 OFF.

Note that, in the second setting information, when the operating state is the stopped state, "Enabled" is associated with all of the target devices. Thus, when the machine tool 1 is in the stopped state, when the corresponding ON/OFF switch is operated to turn ON one of the target devices, the numerical control device 30 turns the corresponding target device ON. Further, when the machine tool 1 is in the stopped state, when the corresponding ON/OFF switch is operated to turn OFF one of the target devices, the numerical control device 30 turns the corresponding target device OFF.

Note that a configuration may be adopted in which the switching of the ON/OFF state is caused to be impossible by hiding the display of the ON/OFF switch for the target device associated with "Disabled" in the second setting information.

### Parameter settings (power saving mode)

When an operation is performed to select the parameter setting switch 12D (refer to FIG. 4) of the operation screen 120A, the operation screen 120A is switched to the operation screen 120C shown in FIG. 8. As shown in FIG. 8, on the operation screen 120C, selectable option switches "Do not turn OFF" and "Turn OFF" are associated with each of the target devices (the motor 50, the shower pump 22, the nozzle pump 23, the interior light 61, the display portion 12, and the fan 62). For the target device for which the option switch "Turn OFF" has been selected, "OFF" is set in the first setting information. Note that FIG. 5 shows a case in which the option switch "Turn OFF" has been selected for all the target devices in FIG. 8.

### Various processing

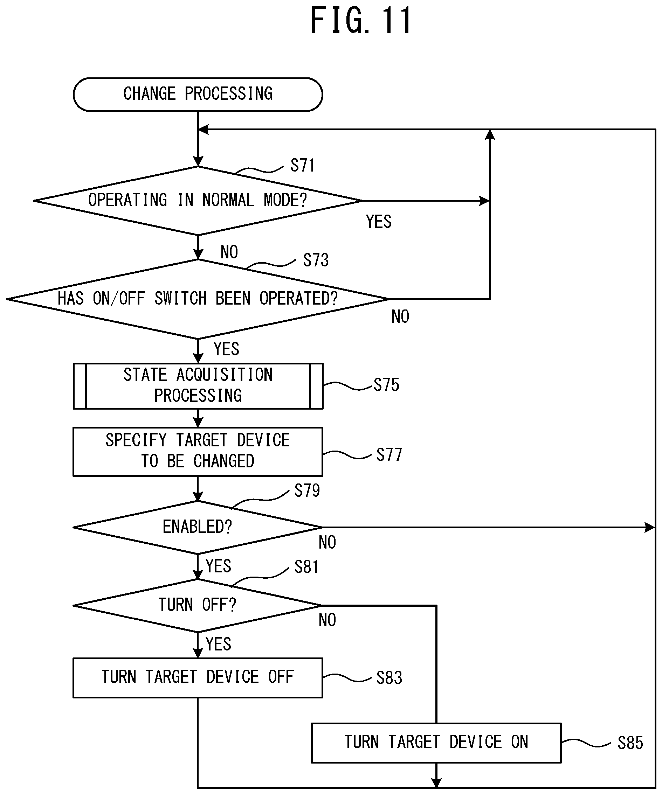

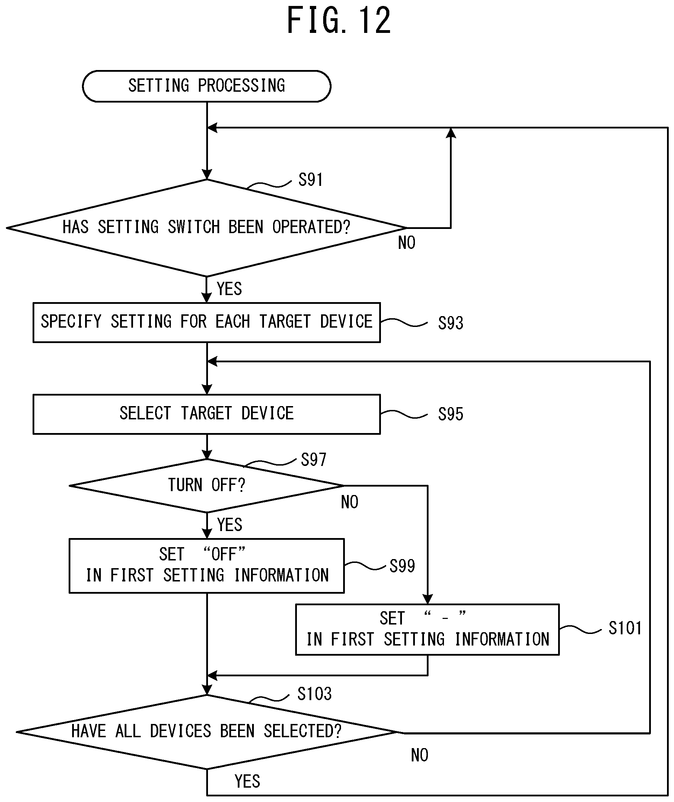

Switching processing (refer to FIG. 9), change processing (refer to FIG. 11), and setting processing (refer to FIG. 12) executed by the numerical control device 30 will be described with reference to FIG. 9 to FIG. 12. The CPU 31 starts the switching processing, the change processing, and the setting processing by reading out and executing the control program stored in the ROM 32. The switching processing is processing for switching the operating mode of the machine tool 1 between the normal mode and the power saving mode. The change processing is processing for changing the first target device to a second target device. The setting processing is processing for setting the first setting information. The switching processing, the change processing, and the setting processing are executed in parallel to each other.

### Switching processing

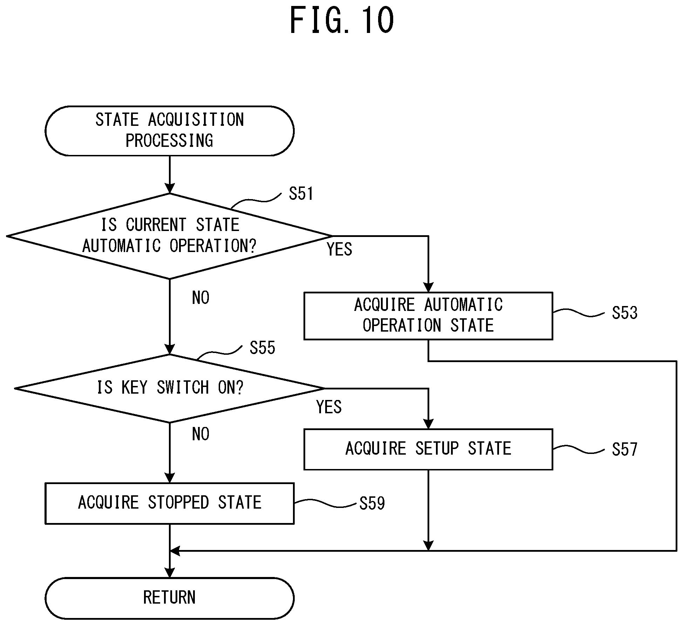

The switching processing will be described with reference to FIG. 9. When the switching processing is started, the machine tool 1 is being driven in the normal mode. The CPU 31 displays the operation screen 120A (refer to FIG. 4) on the display portion 12. The CPU 31 determines whether the mode switching switch 12C has been selected on the operation screen 120A (S11). When the CPU 31 determines that the mode switching switch 12C has not been selected (no at S11), the CPU 31 returns the processing to S11. The CPU 31 continuously stands by to receive the selection of the mode switching switch 12C. When the CPU 31 determines that the mode switching switch 12C has been selected (yes at S11), the CPU 31 executes state acquisition processing (refer to FIG. 10) to acquire the operating mode of the machine tool 1 (S13).

The state acquisition processing will be described with reference to FIG. 10. The CPU 31 determines whether the machine tool 1 is currently being automatically operated (S51). Here, for example, when the operation to select and execute the machining program has been performed via the input portion 11, the CPU 31 reads out the machining program from the non-volatile storage device 34 and stores the machining program in the RAM 33. Subsequently, the CPU 31 executes the automatic operation by the machine tool 1, by sequentially reading and out and executing the instructions from the machining program stored in the RAM 33. When the CPU 31 determines that the machine tool 1 is being automatically operated (yes at S51), the CPU 31 acquires the automatic operation state as the operating state (S53). The CPU 31 ends the state acquisition processing and returns the processing to the switching processing (refer to FIG. 9).

When the CPU 31 determines that the machine tool 1 is not being automatically operated (no at S51), the CPU 31 determines whether the key switch of the input portion 11 is ON (S55). When the CPU 31 determines that the key switch is ON (yes at S55), the CPU 31 acquires the setup state as the operating state (S57). The CPU 31 ends the state acquisition processing and returns the processing to the switching processing (refer to FIG. 9).

When the CPU 31 determines that the key switch is not ON (no at S55), the CPU 31 acquires the stopped state as the operating state (S59). The CPU 31 ends the state acquisition processing and returns the processing to the switching processing (refer to FIG. 9).

As shown in FIG. 9, after ending the state acquisition processing (S13), the CPU 31 determines whether the operating state acquired by the state acquisition processing is the automatic operation state (S15). When the CPU 31 determines that the acquired operating state is the automatic operation state (yes at S15), the CPU 31 determines the first target device in the automatic operation state, based on the first setting information (refer to FIG. 5) (S17). Specifically, of the first setting information shown in FIG. 5, the interior light 61 and the display portion 12 associated with "OFF" in the automatic operation state are determined as the first target devices. The CPU 31 advances the processing to S25.

When the CPU 31 determines that the operating state acquired by the state acquisition processing is not the automatic operation state (no at S15), the CPU 31 determines whether the acquired operating state is the setup state (S19). When the CPU 31 determines that the acquired operating state is the setup state (yes at S19), the CPU 31 determines the first target device in the setup state, based on the first setting information (refer to FIG. 5) (S21). Specifically, of the first setting information shown in FIG. 5, the shower pump 22, the nozzle pump 23, and the display portion 12 associated with "OFF" in the setup state are determined as the first target devices. The CPU 31 advances the processing to S25.

When the CPU 31 determines that the operating state acquired by the state acquisition processing is not the setup state (no at S19), the CPU 31 determines that the acquired operating state is the stopped state. The CPU 31 determines the first target device in the stopped state, based on the first setting information (refer to FIG. 5) (S23). Specifically, of the first setting information shown in FIG. 5, the motor 50, the shower pump 22, the nozzle pump 23, the interior light 61, the display portion 12, and the fan 62 associated with "OFF" in the stopped state are determined as the first target devices. The CPU 31 advances the processing to S25.

The CPU 31 switches the operating mode of the machine tool 1 from the normal mode to the power saving mode (S25). The CPU 31 turns OFF the first target device determined at any one of S17, S21, and S23 (S27). The CPU 31 displays the operation screen 120B including the pictogram 12E (refer to FIG. 6) on the display portion 12 (S29).

The CPU 31 determines whether, in the state in which the machine tool 1 is driven in the power saving mode, the mode switching switch 12C on the operation screen 120B has been selected (S31). When the CPU 31 determines that the mode switching switch 12C has been selected (yes at S31), the CPU 31 switches the operating mode of the machine tool 1 from the power saving mode to the normal mode (S35). The CPU 31 displays the operation screen 120A (refer to FIG. 4) that does not include the pictogram 12E on the display portion 12 (S37). The CPU 31 returns the processing to S11.

When, in the state in which the machine tool 1 is driven in the power saving mode, the CPU 31 determines that the mode switching switch 12C on the operation screen 120B has not been selected (no at S31), the CPU 31 determines whether the ON/OFF switches have been operated to turn all of the target devices ON (S33). Specifically, when the motor switch has been operated to turn the motor 50 ON, the shower switch has been operated to turn the shower pump 22 ON, the coolant switch has been operated to turn the nozzle pump 23 ON, the interior light switch 12A has been operated to turn the interior light 61 ON, the screen switch 12B has been operated to turn the display portion 12 ON, and the fan switch has been operated to turn the fan 62 ON, the CPU 31 determines that the ON/OFF switches have been operated to turn all of the target devices ON (yes at S33). In this case, the CPU 31 switches the operating mode of the machine tool 1 from the power saving mode to the normal mode (S35), and ends the power saving mode.

On the other hand, when the CPU 31 determines that the ON/OFF switches have not been operated to turn all of the target devices ON (no at S33), the CPU 31 returns the processing to S13. In this case, the machine tool 1 is maintained in the power saving mode. Further, when the operating mode of the machine tool 1 is changed in the state in which the machine tool 1 is driven in the power saving mode, the first target device is determined from the first setting information, based on the operating mode after the change, and the first target device is turned OFF.

The change processing will be described with reference to FIG. 11. The CPU 31 determines whether the machine tool 1 is being driven in the normal mode (S71). When the CPU 31 determines that the machine tool 1 is being driven in the normal mode (yes at S71), the CPU 31 returns the processing to S71. When the CPU 31 determines that the machine tool 1 is not being driven in the normal mode (no at S71), the CPU 31 determines that the machine tool 1 is being driven in the power saving mode. The CPU 31 determines whether any one of the ON/OFF switches has been operated (S73). When the CPU 31 determines that the ON/OFF switches have not been operated (no at S73), the CPU 31 returns the processing to S71.

When the CPU 31 determines that any one of the ON/OFF switches has been operated (yes at S73), the CPU 31 executes the state acquisition processing (refer to FIG. 10) to acquire the operating mode of the machine tool 1 (S75). The state acquisition processing is the same as the state acquisition processing executed at S13 of the switching processing (refer to FIG. 9), and a description of it is thus omitted here.

The CPU 31 specifies the target device for which the drive state is to be changed by the operation of the ON/OFF switch (S77).

As information of the target device specified at S77, of the second setting information (refer to FIG. 7), the CPU 31 determines whether "Enabled" is associated in the operating state acquired at S75 (S79). When the CPU 31 determines that "Disabled" is associated (no at S79), the CPU 31 returns the processing to S71. In this case, the target device to be turned OFF in the power saving mode is not changed, and remains as the first target device based on the first setting information.

On the other hand, when the CPU 31 determines that "Enabled" is associated (yes at S79), the CPU 31 determines whether the ON/OFF switch has been operated to turn the target device OFF (S81). When the operation to turn the target device OFF has been performed (yes at S81), the CPU 31 turns OFF the target device specified at S77 (S83). The CPU 31 returns the processing to S71. On the other hand, when the operation to turn ON the target device has been performed (no at S81), the CPU 31 turns ON the target device specified at S77 (S85). The CPU 31 returns the processing to S71.

In this way, the target device to be turned OFF in the power saving mode is changed from the first target device, which is the target device associated with "OFF" in the first setting information, to the second target device, which is the target device turned OFF as a result of S83 and S85.

For example, when the shower switch has been operated to turn ON the shower pump 22 when the machine tool 1 is in the stopped state, "Enabled" is associated with the shower pump 22 in the stopped state in the second setting information, and thus, the numerical control device 30 turns the shower pump 22 ON. In this case, the first target devices (the motor 50, the shower pump 22, the nozzle pump 23, the interior light 61, the display portion 12, and the fan 62) based on the first setting information are changed to the second target devices (the motor 50, the nozzle pump 23, the interior light 61, the display portion 12, and the fan 62) as a result of the shower pump 22 being turned ON. Next, when the interior light switch 12A has been operated to turn the interior light 61 ON, "Enabled" is associated with the interior light switch 12A in the stopped state in the second setting information, and thus, the numerical control device 30 turns the interior light 61 ON. In this case, the first target devices (the motor 50, the shower pump 22, the nozzle pump 23, the interior light 61, the display portion 12, and the fan 62) based on the first setting information are changed to the second target devices (the motor 50, the nozzle pump 23, the display portion 12, and the fan 62) as a result of the shower pump 22 being turned ON and the interior light 61 being turned ON.

### Setting processing

The setting processing will be described with reference to FIG. 12. The CPU 31 determines whether an operation specifying the operating state of a setting target has been performed, and whether the parameter setting switch 12D on the operation screen 120A has been operated (S91). When the CPU 31 determines that the parameter setting switch 12D has not been operated (no at S91), the CPU 31 returns the processing to S91. When the CPU 31 determines that the parameter setting switch 12D has been operated (yes at S91), the CPU 31 displays, on the display portion 12, an operation screen (the operation screen 120C (refer to FIG. 8), for example) in order to set information of the drive state specified in the first setting information.

On the operation screen, the operator selects one of the option switches of "turn OFF" and "Do not turn OFF" associated with all of the target devices. The CPU 31 identifies which of "Turn OFF" and "Do not turn OFF" has been set for each of the target devices (S93).

The CPU 31 selects one of the plurality of target devices (S95). The CPU 31 determines whether the "Turn OFF" option switch has been selected (S97). When the CPU 31 determines that the "Turn OFF" option switch has been selected (yes at S97), the CPU 31 sets information corresponding to the stopped state, and which is the information of the target device selected at S95 in the first setting information, to "OFF" (S99). On the other hand, when the CPU 31 determines that the "Do not turn OFF" option switch has been selected (no at S97), the CPU 31 sets information corresponding to all of the operating states, and which is the information of the target device selected at S95 in the first setting information, to " - " (S101). The CPU 31 advances the processing to S103.

The CPU 31 determines whether all of the target devices have been selected at S95 (S103). When the CPU 31 determines that all of the target devices have not been selected (no at S103), the CPU 31 returns the processing to S95. The CPU 31 selects one of the target devices from among the target devices that have not been selected (S95), and repeats the processing from S97 to S101. When the CPU 31 determines that all of the target devices have been selected at S95 (yes at S103), the CPU 31 returns the processing to S91. In this way, the first target devices that are the target devices associated with "OFF" in the first setting information are set in accordance with the operations on the operation screen.

### Actions and effects of present embodiment

When the mode switching switch 12C has been selected by the operator, the numerical control device 30 causes the machine tool 1 to be in the power saving mode by collectively turning OFF the first target devices specified by the first setting information (S25, S27). In this way, the numerical control device 30 contributes to the operator easily switching the operating mode of the machine tool 1 from the normal mode to the power saving mode that saves the power consumption. Further, the numerical control device 30 contributes to changing the target device to be turned OFF in the power saving mode from the first target device to the second target device by the operator operating the ON/OFF switch of the machine tool 1 that is being driven in the power saving mode (S83, S85). Thus, the numerical control device 30 contributes to making it easier for the operator to change the target device that is to be turned OFF in the power saving mode.

When the ON/OFF switch is operated in the power saving mode, for the target device corresponding to the operated ON/OFF switch, the numerical control device 30 switches the ON/OFF state when "Enabled" is associated with the target device in the second setting information (S79). In this case, the numerical control device 30 contributes to limiting the target device for which the ON/OFF state can be switched in the power saving mode, to a range of the conditions specified by the second setting information.

The numerical control device 30 acquires the operating state (the automatic operation state, the setup state, the stopped state) of the machine tool 1 (S13), and, based on the acquired operating state, determines the first target device from the first setting information (S17, S21, S23). In this way, the numerical control device 30 contributes to specifying the first target device to be turned OFF in the power saving mode for each of the operating states of the machine tool 1.

The second setting information specifies, for each of the operating states of the machine tool 1, the target device for which the ON/OFF state can be switched in the power saving mode. The numerical control device 30 switches the ON/OFF state of the target device, based on the settings ("Enabled" or "Disabled") according to the operating state of the machine tool 1, of the second setting information. In this way, the numerical control device 30 contributes to specifying, for each of the operating states of the machine tool 1, the target device for which the ON/OFF state can be switched in the power saving mode.

When the ON/OFF switches have been operated to turn all of the target devices ON (yes at S33), the numerical control device 30 ends the power saving mode and returns to the normal mode (yes at S33). In this way, the numerical control device 30 contributes to ending the power saving mode when the instruction not to turn OFF all the target devices has been received, regardless of whether the machine tool 1 is currently being driven in the power saving mode.

When the machine tool 1 is currently being driven in the power saving mode, the numerical control device 30 displays, on the display portion 12, the operation screen 120B in which the pictogram 12E is displayed in the upper right portion (S29). The numerical control device 30 contributes to the operator recognizing that the machine tool 1 is being driven in the power saving mode, by visually checking the display portion 12.

When the parameter setting switch 12D has been selected (yes at S91), the numerical control device 30 changes the first setting information (S99, S101). Thus, the numerical control device 30 contributes to allowing the operator to change the settings with regard to which of the target devices is to be turned OFF when starting the power saving mode.

When the mode switching switch 12C is selected in the state in which the machine tool 1 is being driven in the normal mode, the numerical control device 30 switches the machine tool 1 to the power saving mode. The numerical control device 30 contributes to driving the machine tool 1 in the power saving mode in which the first target devices are collectively turned OFF, by the operator simply selecting the mode switching switch 12C.

When the ON/OFF switch is selected in the state in which the machine tool 1 is being driven in the power saving mode, the numerical control device 30 switches the ON/OFF state of the corresponding target device. The numerical control device 30 contributes to changing the target device that is to be turned OFF in the power saving mode from the first target device specified by the first setting information to the second target device for which the ON/OFF state has been already switched by the operator selecting the ON/OFF switch.

### Modified examples

The present disclosure is not limited to the above-described embodiment, and various modifications are possible. The operation by the operator to change the first target device to the second target device is not limited to that of the above-described embodiment. For example, in the state in which the machine tool 1 is driven in the power saving mode, the numerical control device 30 may display the operation screen 120C on the display portion 12. The operator may select one of "Do not turn OFF" and "Turn OFF" associated with the target devices. In this case, the numerical control device 30 may specify, as the second target device, the target device for which the "Turn OFF" option switch has been selected. The numerical control device 30 may change the target device to be turned OFF in the power saving mode from the first target device specified based on the first setting information to the second target device specified by the operation performed on the operation screen 120C.

The operating states of the machine tool 1 are not limited to the three states of the automatic operation state, the setup state, and the stopped state. Only two of these states may be included, or another operating state may be further included. In the first setting information, a shared setting ("OFF", " - ") that is applied regardless of the operating state may be stored. In the second setting information, a shared setting "Enabled", "Disabled") that is applied regardless of the operating state may be stored.

In addition to operating the ON/OFF switch, the operator may input a stand-by time via the touch panel 13. When the stand-by time input via the touch panel 13 has elapsed after switching to the power saving mode, the numerical control device 30 may switch the ON/OFF state of the corresponding target device in accordance with the operation of the ON/OFF switch.

Even when the ON/OFF switches have been operated to turn ON all of the target devices (yes at S33), the numerical control device 30 may continue without ending the power saving mode.

A notification image that notifies that the machine tool 1 is being driven in the power saving mode is not limited to the pictogram 12E of the operation screen 120B. For example, another notification image may be displayed on the display portion 12, or an LED or circuit light (not shown in the drawings) that the machine tool 1 has may be illuminated.

The mode switching switch 12C may be a physical switch of the input portion 11. All of the ON/OFF switches may be configured by option switches displayed on the display portion 12, or may be the physical switches included in the input portion 11.

The first setting information and the second setting information may be stored in a storage portion of an external device capable of communicating with the numerical control device 30. The numerical control device 30 may execute the various processing by performing communication with the external device and referring to the first setting information and the second setting information stored in the storage portion of the external device. Alternatively, the numerical control device 30 may perform communication with the external device and set the first setting information stored in the storage portion of the external device.

### Other

The numerical control device 30 is an example of a "control device" of the present disclosure. The CPU 31 that performs the processing at S11 is an example of "first reception processing" of the present disclosure. The motor 50, the shower pump 22, the nozzle pump 23, the interior light 61, the display portion 12, and the fan 62 are an example of a "device" of the present disclosure. The non-volatile storage device 34 in which the first setting information and the second setting information are stored is an example of a "storage portion" of the present disclosure. The CPU 31 that performs the processing at S27 is an example of "drive processing" of the present disclosure. The CPU 31 that performs the processing at S73 is an example of "second reception processing" of the present disclosure. The CPU 31 that performs the processing at S83 and S85 is an example of "change processing" of the present disclosure. The CPU 31 that performs the state acquisition processing is an example of "acquisition processing" of the present disclosure. The processing at S35 is an example of "end processing" of the present disclosure. The pictogram 12E is an example of a "notification image" of the present disclosure. The CPU 31 that performs the processing at S29 is an example of "display processing" of the present disclosure. The CPU 31 that performs the processing at S99 and 101 is an example of "setting processing" of the present disclosure. The mode switching switch 12C is an example of a "first switch" of the present disclosure. The ON/OFF switch (the motor switch, the shower switch, the coolant switch, the fan switch, and the interior light switch 12A and the screen switch 12B of the operation screen 120A) is an example of a "second switch" of the present disclosure.

## Claims

1. A control device (30) for driving a machine tool (1) in a power saving mode that is an operating mode saving power consumption of the machine tool (1), the control device (30) executing processes comprising:
first reception processing of receiving a first instruction for driving the machine tool (1) in the power saving mode;
drive processing of driving the machine tool (1) in the power saving mode when the first instruction is received by the first reception processing, by turning OFF, based on first setting information stored in a storage portion (34), a first target device among devices (12, 22, 23, 50, 61, 62) that the machine tool has(1);
second reception processing of receiving a second instruction, in a state in which the machine tool (1) is being driven in the power saving mode by the drive processing; and
change processing of changing the device to be turned OFF by the drive processing from the first target device to a second target device, based on the second instruction received by the second reception processing.

2. The control device (30) according to claim 1, wherein
the storage portion (34) further stores second setting information specifying a condition when changing the first target device to the second target device by the change processing, and
the change processing includes changing the device to be turned OFF by the drive processing from the first target device to the second target device by switching an ON/OFF state of the device within a range of the condition specified by the second setting information.

3. The control device (30) according to claim 1, wherein
in the first setting information, the first target device is specified for each of operating states of the machine tool (1),
the control device (30) further executes a process comprising:
acquisition processing of acquiring the operating state, and
the drive processing includes
determining, based on the first setting information, the first target device to be turned OFF in the operating state acquired by the acquisition processing, and
driving the machine tool (1) in the power saving mode by turning OFF the determined first target device.

4. The control device (30) according to claim 3, wherein
the storage portion (34) further stores second setting information specifying, for each of the operating states of the machine tool (1), a condition when changing the first target device to the second target device by the change processing, and
the change processing includes changing the device to be turned OFF by the drive processing from the first target device to the second target device by switching an ON/OFF state of the device within a range of the condition specified by the second setting information in the operating state acquired by the acquisition processing.

5. The control device (30) according to claim 1, further executing a process comprising:
end processing of ending the driving in the power saving mode by the drive processing, when the second instruction is received, by the second reception processing, in which none of the devices (12, 22, 23, 50, 61, 62) are specified as the second target device.

6. The control device (30) according to claim 1, further executing a process comprising:
display processing of displaying, on a display portion, a notification image (12E) notifying that the machine tool (1) is being driven in the power saving mode by the drive processing.

7. The control device (30) according to claim 1, further executing a process comprising:
setting processing for setting the first target device in the first setting information.

8. The control device (30) according to claim 1, wherein
the first reception processing includes receiving the first instruction in accordance with selection of a first switch for driving the machine tool (1) in the power saving mode.

9. The control device (30) according to claim 1, wherein
the second reception processing includes receiving the second instruction in accordance with selection of a second switch corresponding to the second target device.
